# EUROPEAN PATENT SPECIFICATION

(11) **EP 0 416 093 B1**
(45) Date of publication and mention of the grant of the patent: **15.06.1994**
(21) Application number: 90905911.5
(22) Date of filing: 13.03.1990
(51) Int. Cl.: A23G 3/30

(54) **CHEWING GUM WITH LONGER LASTING SWEETNESS USING ALITAME**
KAUGUMMI MIT LÄNGER ANHALTENDER SÜSSE MITTELS ALITAM
CHEWING-GUM UTILISANT DE L'ALITAME POUR PROLONGER SON GOUT SUCRE

(30) Priority: 28.03.1989 WO PCT/US89/01269; 29.12.1989 US 458594
(43) Date of publication of application: 13.03.1991
(73) Proprietor: WM. WRIGLEY JR. COMPANY, Chicago Illinois 60611 (US)
(72) Inventor: YATKA, Robert, J., Orland Park, IL 60462 (US); McGREW, Gordon, N., Evanston, IL 60202 (US)
(74) Representative: Allard, Susan Joyce
(86) International application number: US9001381
(87) International publication number: WO9011021

(56) References cited:
- EP-A- 0 302 024
- EP-A- 0 314 617
- WO-A-88/08672
- US-A- 4 411 925
- US-A- 4 536 396
- US-A- 4 792 453
- US-A- 4 804 543
- US-A- 4 806 364
- US-A- 4 849 238
- US-A- 4 861 600
- US-A- 4 863 745
- US-A- 4 885 175
- US-A- 4 889 726
- US-A- 4 889 727
- US-A- 4 902 519
- US-A- 4 904 482
- US-A- 4 917 913
- US-A- 4 931 295

## Description

This invention relates to chewing gums having longer lasting sweetness and flavor intensity.

Commercially available chewing gums generally comprise a water-soluble bulk portion and a water-insoluble gum base portion. Incorporated within the gum base portion may be elastomers, fillers and softeners to improve the texture of the gum. The gum may also contain flavors and sweetening agents such as sugar or, for sugarless chewing gums, artificial sweetening agents such as saccharin, acesulfame, and aspartame.

However, one of the limitations of commercially available chewing gums is their rapid loss of both sweetness and flavor intensity during chewing. One solution, disclosed in U.S. Patent Nos. 3,943,258, 3,982,023 and 4,036,992 is to add aspartame to the gum composition in addition to the sweetener already present (which could also be aspartame). Where only aspartame is used to sweeten the gum, it is stated that the amount of aspartame required is greater than 0.3% by weight of the final composition. Where other sweeteners are used, including non-dipeptide artificial sweeteners, aspartame is used at a concentration as low as about 0.1% by weight of the final gum composition. The result is a gum whose normal sweetness and flavor is extended.

In addition, one of the limitations of sugarless gums is their bitter aftertaste when a sweetening agent like acesulfame is used at a concentration level to produce a gum having a normally accepted sweetness intensity. To remedy the bitter aftertaste, U.S. Patent No. 4,536,396 discloses the use of Alitame in minor amounts to mask the bitter aftertaste of acesulfame and produce a synergistic sweetening effect. The amount of Alitame used in the examples is 0.01% or less by weight of the total gum composition.

Alitame, L-α-Aspartyl-N-(2,2,4,4-tetramethyl-3-thietanyl)-D-alaninamide hydrate, is a sweetening agent described in U.S. Patent No. 4,411,925. This patent shows the use of Alitame with a sweetening agent like sorbitol or corn syrup in an amount to sweeten edible products, including chewing gum. The patent also discloses that Alitame is approximately 2000 times sweeter than sucrose, advantageously making it sweeter than aspartame, which is only up to 200 times sweeter than sucrose. Therefore, it is estimated that Alitame is about 10 times sweeter than aspartame. From tests using Alitame in gum it is estimated that the amount of Alitame needed to impart normally accepted sweetness to sugarless chewing gum is from 0.01% to 0.03% by weight of the final chewing gum composition.

Furthermore, it has been found that other properties of Alitame make its use in gum more advantageous than aspartame. Aspartame has a low solubility in water or solvent. On the other hand, Alitame is much more soluble in water and solvents such as alcohols. Therefore, it can be more easily formulated and used in manufacturing chewing gum.

The invention provides a chewing gum composition with from 5% to 95% of gum base; 0.1% to 10% of flavour; 10% to 90% of a first sweetening agent selected from the group consisting of sugar, sugar alcohols, and mixtures thereof; and Alitame, the Alitame being present in an amount greater than 0.02% by weight of the total gum composition when said first sweetening agent is present in an amount sufficient to impart at least a normal level of sweetness to the gum and wherein the amount of Alitame present is increased when the amount of said first sweetening agent is less than an amount sufficient to impart at least a normal level of sweetness to the gum, the amount of Alitame being sufficient to provide the gum with extended sweetness and flavour intensity compared with gum containing amounts of sweeteners which impart a normal level of sweetness to the gum. The gum composition is produced by providing from 5% to 95% of gum base; 0.1% to 10% of flavour; 10% to 90% of a sweetening agent; Alitame, the Alitame being present in an amount greater than 0.02% by weight of the total gum composition when said first sweetening agent is present in an amount sufficient to impart at least a normal level of sweetness to the gum and wherein the amount of Alitame present is increased when the amount of said first sweetening agent is less than an amount sufficient to impart at least a normal level of sweetness to the gum, the amount of Alitame being sufficient to provide the gum with extended sweetness and flavour intensity compared with gum containing amounts of sweeteners which impart a normal level of sweetness to the gum; then combining the ingredients to produce the gum composition. The composition is then further worked into sticks, chunks, pellets, and the like. The invention also provides a method of extending the sweetness of flavour intensity of a chewing gum composition comprising intimately admixing the gum base, flavour sweetening agent and Alitame as described above.

It has been found that chewing gums prepared in accordance with this invention have a sweetness and flavour intensity that remains higher and for a longer period of time than does a chewing gum having normally accepted sweetness intensity. Yet, these chewing gums do not have an excessively high initial release of sweetness and flavour intensity. The chewing gum composition may be either sugar-containing or sugarless.

Figure 1 is a graph plot of a tasting panel's sensory perception of the sweetness intensity of four sample formulas of gum over time.

Figure 2 is graph plot of a tasting panel's sensory perception of the flavor intensity of the same four sample formulas of gum over time.

### DETAILED DESCRIPTION OF THE INVENTION AND PREFERRED EMBODIMENTS

Unless otherwise specified herein, all percents (%) are weight percents.

The chewing gums contemplated in this invention generally comprise a water-soluble bulk portion, a water-insoluble chewable gum base portion and typically water-insoluble flavoring agents. The water-soluble portion dissipates with a portion of the flavoring agent over a period of time during the chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. The insoluble gum base generally constitutes from 5 to 95 percent by weight of the gum, preferably from 10 to 50 percent, and most preferably from 20% to 30%.

The gum base typically also includes a filler component. The filler component may be calcium carbonate, magnesium carbonate, talc, dicalcium phosphate or the like. The filler may constitute from 5 to 60 percent by weight of the gum base.

Gum bases typically also contain softeners, including glycerol monosterate and glycerol triacetate. Further, gum bases may also contain optional ingredients such as antioxidants, colors, and emulsifiers. The present invention contemplates employing any commercially acceptable gum base.

The water-soluble portion of the chewing gum may further comprise softeners, sweeteners, flavoring agents and combinations thereof. Softeners are added to the chewing gum in order to optimize the chewability of the gum and the mouth feel of the gum. Softeners, also known in the art as plasticizers or plasticizing agents, generally constitute from 0.5 to 15.0 percent by weight of the chewing gum. Softeners contemplated by the present invention include glycerin, lecithin, and combinations thereof. Further, aqueous sweetener solutions such as those containing sorbitol, hydrogenated starch hydrolysates, corn syrup, and combinations thereof may be used as softeners and binding agents in the gum.

A flavoring agent may be present in the chewing gum in an amount within the range of from 0.1 to 10.0 percent, and preferably from 0.5 to 3.0 percent, of the gum. The flavoring agents may comprise essential oils, synthetic flavors, or mixtures thereof including, but not limited to, oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorally acceptable blend. All such flavors and flavor blends are contemplated by the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent. Further portions of the bulking agent may then be added to the mixer. A flavoring agent is typically added with the final portion of the bulking agent. A sweetening agent may be added to the mixer when convenient.

The entire mixing procedure typically takes from five to fifteen minutes, but longer mixing times may sometimes be required. Those skilled in the art will recognize that many variations of the above described procedure may be followed.

If the chewing gum to be prepared is not of the "sugarless" variety, a sugar is used. The term "sugar" is intended to include not only pure sugar (sucrose) but also other sugar-like sweeteners normally used in chewing gums such as dextrose, glucose (corn syrup), and the like, and mixtures thereof. If the chewing gum to be prepared is of the "sugarless" variety, a non-sugar sweetening bulking agent is used. Such sweetening and bulking agents include sugar alcohols such as sorbitol, mannitol, xylitol and the like. High potency sweeteners such as aspartame, salts of acesulfame, saccharin acid and its salts, sucralose, cyclamates and its salts and mixtures thereof may be used to impart a normal level of sweetness to such sugarless gums.

Typically, the sweetening agent is added to the chewing gum composition in an amount to impart a normally accepted sweetness intensity to the chewing gum. However, at these concentrations, the chewing gums, whether they are sugar-containing or sugarless, lose their sweetness and flavor intensity within a few minutes. However, if the concentration of the sweetening agent is increased in an attempt to extend the sweetness and flavor intensity, then the initial sweetness and flavor intensity will be excessive.

It has been found that adding Alitame to the chewing gum composition in an effective amount will extend the time that a high level of sweetness and flavor intensity is discernible during chewing. The amount of Alitame necessary to achieve this sweetness and flavor intensity extension will vary according to the amount of gum base, flavor, and sweetening agent used. Generally, it has been found that the addition of Alitame at a level of from 0.01% to 0.03% by weight of a sugarless gum composition corresponds to the normally accepted sweetness intensity of gum where Alitame is intended to be the primary sweetener. When Alitame is used at a level above about 0.04% by weight of the total gum composition, the sweetness and flavor intensity will be extended beyond that of gum using Alitame present in an amount that provides a normally accepted sweetness intensity.

In gums where the normal level of sweetness is provided by sweetening agents including sugar alcohols such as sorbitol, mannitol, xylitol and the like, and high potency sweeteners such as aspartame, salts of acesulfame, saccharin acid, and its salts, sucralose, cyclamates and its salts and mixtures thereof, it is expected that the addition of Alitame will extend the sweetness and flavor intensity.

The upper limit at which Alitame may be added is subject solely to considerations of the undesirability of imparting an excessive initial sweetness intensity to the gum. While this consideration depends greatly upon individual preference, it is expected that levels of greater than 0.2% will result in a chewing gum of excessively sweet taste throughout the initial portion of the chewing period.

Where the sweetening and bulking agents used are not very sweet by themselves, the use of Alitame within the range of from 0.04% to 0.2% by weight of the total gum composition results in a gum having an extended sweetness and flavor intensity in excess of that achieved when sweetening agents or Alitame are used at a concentration to impart normally accepted sweetness intensity. Even with the use of an increased level of Alitame, the gum does not exhibit excessive sweetness intensity during the initial chewing period. In sugar containing gums, or sugarless gums where other high potency sweeteners are used to impart a normal level of sweetness, the use of Alitame within the range of from 0.02% to 0.2% of the total gum composition results in a gum having an extended sweetness.

Four sugarless gum compositions were prepared from the following formulas:

| Ingredient | % Composition | | | |
|---|---|---|---|---|
| | Sample 1 | Sample 2 | Sample 3 | Sample 4 |
| Chewing Gum Base | 25.5 | 25.5 | 25.5 | 25.5 |
| Sorbitol | 49.2 | 49.375 | 49.35 | 49.3 |
| Mannitol | 8.0 | 8.0 | 8.0 | 8.0 |
| Glycerin | 8.6 | 8.6 | 8.6 | 8.6 |
| Lycasin | 6.8 | 6.8 | 6.8 | 6.8 |
| Lecithin | 0.2 | 0.2 | 0.2 | 0.2 |
| Color | 0.05 | 0.05 | 0.05 | 0.05 |
| Flavor | 1.45 | 1.45 | 1.45 | 1.45 |
| Aspartame | 0.20 | ---- | ---- | ---- |
| Alitame | ---- | 0.025 | 0.05 | 0.10 |
| | 1̅0̅0̅.̅0̅0̅ | 1̅0̅0̅.̅0̅0̅ | 1̅0̅0̅.̅0̅0̅ | 1̅0̅0̅.̅0̅0̅ |

The compositions were generally prepared by providing the individual ingredients, combining them, and then preparing them into pieces for testing. The gum base was melted and added to a running mixer. Then the color, lecithin, and sorbitol were added in the first three minutes of mixing. The mannitol, lycasin, glycerin, Alitame or aspartame were added within the next two to three minutes. The flavor was added last at minute eight. The entire mixing procedure was thirteen minutes. The composition was then discharged from the mixer and formed into pieces.

In order to measure the sweetness and flavor intensity duration in a chewing gum, taste tests were conducted using trained personnel to evaluate the intensity of sweetness and flavor over time. Panel members were given a stick of gum and asked to chew and record their sensory perception for sweetness and flavor intensity at selected times. Comparisons were made between Sample 1 (used as a control) and the other Samples. The following was observed:

| Time (Min.) | Sweetness Intensity | | | |
|---|---|---|---|---|
| | Sample 1 | Sample 2 | Sample 3 | Sample 4 |
| 0.5 | 9.45 | 9.79 | 10.64 | 11.81 |
| 1.0 | 10.44 | 10.66 | 10.94 | 11.88 |
| 2.0 | 6.10 | 6.26 | 7.16 | 9.35 |
| 3.0 | 4.23 | 3.52 | 4.81 | 6.42 |
| 6.0 | 2.49 | 1.10 | 2.92 | 3.55 |
| 9.0 | 0.96 | 1.02 | 1.28 | 2.50 |
| 12.0 | 0.63 | 0.62 | 1.06 | 1.56 |

| Time (Min.) | Flavor Intensity | | | |
|---|---|---|---|---|
| | Sample 1 | Sample 2 | Sample 3 | Sample 4 |
| 0.5 | 8.50 | 8.41 | 9.59 | 8.80 |
| 1.0 | 9.09 | 9.31 | 10.05 | 9.55 |
| 2.0 | 6.75 | 7.03 | 7.71 | 7.77 |
| 3.0 | 5.87 | 5.41 | 6.07 | 6.33 |
| 6.0 | 3.76 | 3.43 | 4.45 | 4.13 |
| 9.0 | 1.94 | 1.78 | 2.38 | 2.71 |
| 12.0 | 1.24 | 1.33 | 1.64 | 1.56 |

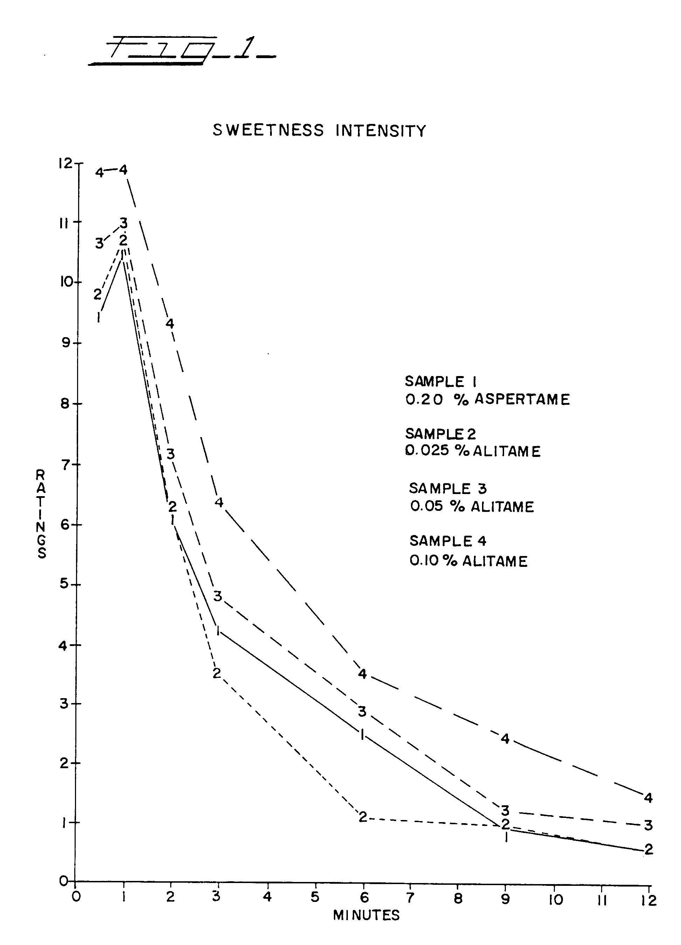

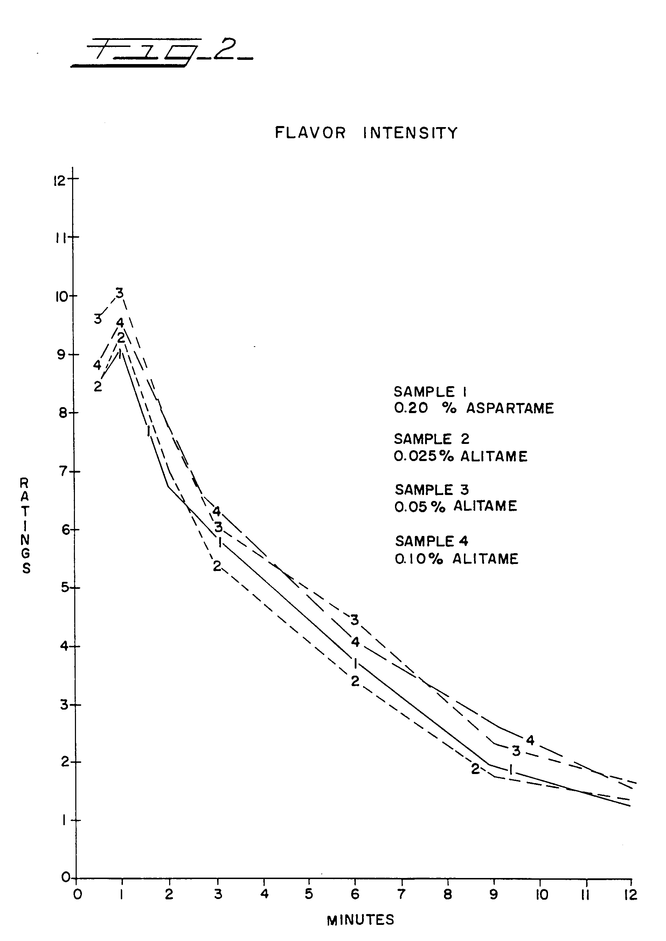

The results are also shown graphically in Figs. 1 and 2. The results showed that the use of Alitame at levels of 0.05% to 0.1% resulted in a gum having a slightly higher initial sweetness and flavor but an extended sweetness compared to the gum having Alitame or another sweetening agent present in an amount to impart normally accepted sweetness intensity.

Sample 2 had a sweetness intensity similar to Sample 1 in the first two to three minutes but decreased significantly after three minutes. When the level of Alitame in the gum composition was increased, as in Samples 3 and 4, there was only a slight, but not excessive, initial increase in the sweetness intensity in the first one to two minutes. Yet the sweetness intensity remained higher even up to twelve minutes.

Furthermore, Sample 2 had a similar flavor intensity as Sample 1 in the first two to three minutes but decreased significantly after three minutes. When the level of Alitame in the gum composition was increased, as in Samples 3 and 4, there was only a slight, but not excessive, initial increase in the flavor intensity in the first one to two minutes. Yet the flavor intensity remained higher even up to twelve minutes.

Sample 3 is the preferred embodiment of the present invention.

Considerations of Alitame stability with respect to certain gum ingredients are discussed in U.S. Patent No. 4,997,659 filed on the same day as the present application, and considerations of L-Aspartic acid derived sweeteners and in particular Aspartams in respect of chewing gum are discussed in EP-A-0302024.

## Claims

1. A chewing gum composition comprising an intimate admixture of:
a) 5% to 95% gum base;
b) 0.1% to 10% flavour;
c) 10% to 90% of a first sweetening agent selected from sugar, sugar alcohols, and mixtures thereof; and
d) Alitame, the Alitame being present in an amount greater than 0.02% by weight of the total gum composition when said first sweetening agent is present in an amount sufficient to impart at least a normal level of sweetness to the gum and wherein the amount of Alitame present is increased when the amount of said first sweetening agent is less than an amount sufficient to impart at least a normal level of sweetness to the gum, the amount of Alitame being sufficient to provide the gum with extended sweetness and flavour intensity compared with gum containing amounts of sweeteners which impart a normal level of sweetness to the gum.

2. A chewing gum composition as claimed in claim 1 wherein the Alitame is present at a level greater than 0.04% by weight of the total gum composition.

3. A chewing gum composition as claimed in claim 2 wherein the Alitame is present at a level of from 0.04% to 0.2% by weight of the total gum composition.

4. A chewing gum composition as claimed in any preceding claim wherein said first sweetening agent is sugar.

5. A chewing gum composition as claimed in any one of claims 1 to 3 wherein said first sweetening agent is a sugar alcohol.

6. A chewing gum composition as claimed in any one of claims 1 to 4, further comprising a non-dipeptide artificial sweetener selected from salts of acesulfame, sucralose, saccharin acid and its salts, cyclamate and its salts, and mixtures thereof.

7. A chewing gum composition as claimed in claim 6 wherein Alitame is present at a level greater than 0.02% by weight of the total gum composition, the sweetening agent and non-dipeptide sweetener together being present in an amount to impart a normal level of sweetness to the gum.

8. A method of producing a gum composition comprising the steps of:
a) providing
5% to 95% by weight of gum base,
0.1% to 10% by weight flavour
10% to 90% by weight of a first sweetening agent selected from sugar, sugar alcohols, and mixtures thereof; and
Alitame, the Alitame being present in an amount greater than 0.02% by weight of the total gum composition when said first sweetening agent is present in an amount sufficient to impart at least a normal level of sweetness to the gum and wherein the amount of Alitame present is increased when the amount of said first sweetening agent is less than an amount sufficient to impart at least a normal level of sweetness to the gum, the amount of Alitame being sufficient to provide the gum with extended sweetness and flavour intensity compared with gum containing amounts of sweeteners which impart a normal level of sweetness to the gum.
b) intimately admixing the gum base, sweetening and bulking agent, flavour, and Alitame to produce a chewing gum composition.

9. A method as claimed in claim 8 wherein the Alitame is present at a level greater than 0.04% by weight of the total gum composition.

10. A method as claimed in claim 9 wherein the Alitame is present at a level of 0.04% to 0.2% by weight of the total gum composition.

11. A method as claimed in any one of claims 8 to 10 wherein the sweetening and bulking agent used is sugar.

12. A method as claimed in any one of claims 8 to 10 wherein the sweetening and bulking agent used is a sugar alcohol.

13. A method as claimed in any one of claims 8 to 12 further comprising the step of combining a non-dipeptide artificial sweetener in the gum composition, said non-dipeptide sweetener being selected from salts of acesulfame, sucralose, saccharin acid and its salts, cyclamate and its salts, and mixtures thereof.

14. A method as claimed in claim 13 wherein the non-dipeptide artificial sweetener and the first sweetening agent are present in an amount to impart a normal level of sweetness to the gum and the Alitame is present at a level greater than 0.02% by weight of the total gum composition.

15. A method of extending the time that sweetness and flavour intensity is discernible during chewing of a chewing gum composition comprising intimately admixing:
a) 5% to 95% gum base;
b) 0.1% to 10% flavour;
c) 10% to 90% of a sweetening agent selected from sugar, sugar alcohols, and mixtures thereof; and
d) Alitame, the Alitame being present in an amount greater than 0.02% by weight of the total gum composition when said first sweetening agent is present in an amount sufficient to impart at least a normal level of sweetness to the gum and wherein the amount of Alitame present is increased when the amount of said first sweetening agent is less than an amount sufficient to impart at least a normal level of sweetness to the gum, the amount of Alitame being sufficient to provide the gum with extended sweetness and flavour intensity compared with gum containing amounts of sweeteners which impart a normal level of sweetness to the gum.

16. A method as claimed in claim 15 wherein the Alitame is present at a level of from 0.04% to 0.2% by weight of the total gum composition.

## Patentansprüche

1. Kaugummi-Zusammensetzung, die besteht aus oder umfaßt eine innige Mischung von:
a) 5 bis 95 % Gummi-Basis;
b) 0,1 bis 10 % Geschmacksbildner (Aromastoff);
c) 10 bis 90 % eines ersten Süßungsmittels, ausgewählt aus Zucker, Zuckeralkoholen und Mischungen davon; und
d) Alitame, das in einer Menge von mehr als 0,02 Gew.-%, bezogen auf die gesamte Kaugummi-Zusammensetzung, vorliegt, wenn das erste Süßungsmittel in einer Menge vorhanden ist, die ausreicht, um dem Kaugummi mindestens einen normalen Grad der Süße zu verleihen, und wobei die Menge des vorhandenen Alitame erhöht wird, wenn die Menge des ersten Süßungsmittels geringer ist als die Menge, die ausreicht, um dem Kaugummi mindestens einen normalen Grad der Süße zu verleihen, wobei die Menge des Alitame ausreicht, um dem Kaugummi eine erhöhte Süße und eine erhöhte Geschmacksintensität zu verleihen, verglichen mit einem Kaugummi, der solche Mengen an Süßungsmitteln enthält, die dem Kaugummi einen normalen Grad der Süße verleihen.

2. Kaugummi-Zusammensetzung nach Anspruch 1, worin das Alitame in einer Menge vorliegt, die größer ist als 0,04 Gew.-%, bezogen auf die gesamte Kaugummi-Zusammensetzung.

3. Kaugummi-Zusammensetzung nach Anspruch 2, worin das Alitame in einer Menge von 0,04 bis 0,2 Gew.-%, bezogen auf die gesamte Kaugummi-Zusammensetzung, vorliegt.

4. Kaugummi-Zusammensetzung nach irgendeinem vorhergehenden Anspruch, worin das erste Süßungsmittel Zucker ist.

5. Kaugummi-Zusammensetzung nach einem der Ansprüche 1 bis 3, worin das erste Süßungsmittel ein Zuckeralkohol ist.

6. Kaugummi-Zusammensetzung nach einem der Ansprüche 1 bis 4, die außerdem ein künstliches Nicht-Dipeptid-Süßungsmittel enthält, das ausgewählt wird aus Salzen von Acesulfam, Sucralose, Saccharinsäure und ihren Salzen, Cyclamat und seinen Salzen und Mischungen davon.

7. Kaugummi-Zusammensetzung nach Anspruch 6, worin das Alitame in einer Menge vorliegt, die größer als 0,02 Gew.-% ist, bezogen auf die gesamte Kaugummi-Zusammensetzung, wobei das Süßungsmittel und das Nicht-Dipeptid-Süßungsmittel gemeinsam in einer Menge vorliegen, die ausreicht, um dem Kaugummi einen normalen Grad der Süße zu verleihen.

8. Verfahren zur Herstellung einer Kaugummi-Zusammensetzung, das die folgenden Stufen umfaßt:
a) Bereitstellung von
5 bis 95 Gew.-% einer Gummi-Basis,
0,1 bis 10 Gew.-% Geschmacksbildner (Aromastoff),
10 bis 90 Gew.-% eines ersten Süßungsmittels, ausgewählt aus Zucker, Zuckeralkoholen und Mischung davon; und
Alitame, das in einer Menge von mehr als 0,02 Gew.-%, bezogen auf die gesamte Kaugummi-Zusammensetzung, vorliegt, wenn das erste Süßungsmittel in einer Menge vorliegt, die ausreicht, um dem Kaugummi mindestens einen normalen Grad der Süße zu verleihen, und wobei die Menge des vorhandenen Alitame erhöht wird, wenn die Menge des ersten Süßungsmittels geringer ist als die Menge, die ausreicht, um dem Kaugummi einen mindestens normalen Grad der Süße zu verleihen, wobei die Menge des Alitame ausreicht, um dem Kaugummi eine erhöhte Süße und eine erhöhte Geschmacksintensität zu verleihen, verglichen mit dem Kaugummi, der solche Mengen an Süßungsmitteln enthält, die dem Kaugummi einen normalen Grad der Süße verleihen, und
b) inniges Mischen der Gummi-Basis, des Süßungsmittels und des Bulking-Mittels (Blähmittels), des Geschmacksbildners und von Alitame zur Herstellung einer Kaugummi-Zusammensetzung.

9. Verfahren nach Anspruch 8, worin das Alitame in einer Menge von mehr als 0,04 Gew.-%, bezogen auf die gesamte Kaugummi-Zusammensetzung, vorliegt.

10. Verfahren nach Anspruch 9, worin das Alitame in einer Menge von 0,04 bis 0,2 Gew.-%, bezogen auf die gesamte Kaugummi-Zusammensetzung, vorliegt.

11. Verfahren nach einem der Ansprüche 8 bis 10, worin das verwendete Süßungsmittel und Bulking-Mittel (Blähmittel) Zucker ist.

12. Verfahren nach einem der Ansprüche 8 bis 10, worin das verwendete Süßungsmittel und Bulking-Mittel (Blähmittel) ein Zuckeralkohol ist.

13. Verfahren nach einem der Ansprüche 8 bis 12, das außerdem die folgende Stufe umfaßt:
Kombinieren eines künstlichen Nicht-Dipeptid-Süßungsmittels mit der Kaugummi-Zusammensetzung, wobei das Nicht-Dipeptid-Süßungsmittel ausgewählt wird aus Salzen von Acesulfam, Sucralose, Saccharinsäure und ihren Salzen, Cyclamat und seinen Salzen und Mischungen davon.

14. Verfahren nach Anspruch 13, worin das künstliche Nicht-Dipeptid-Süßungsmittel und das erste Süßungsmittel in einer Menge vorliegen, die ausreicht, um dem Kaugummi einen normalen Grad der Süße zu verleihen, und das Alitame in einer Menge von mehr als 0,02 Gew.-%, bezogen auf die gesamt Kaugummi-Zusammensetzung, vorliegt.

15. Verfahren zur Verlängerung der Zeitspanne, während der ein süßer Geschmack und eine Geschmacksintensität während des Kauens einer Kaugummi-Zusammensetzung nachweisbar sind, das umfaßt das innige Vermischen von
a) 5 bis 95 % einer Gummi-Basis;
b) 0,1 bis 10 % Geschmacksbildner (Aromastoff);
c) 10 bis 90 % eines ersten Süßungsmittels, ausgewählt aus Zucker, Zuckeralkoholen und Mischungen davon; und
d) Alitame, das in einer Menge von mehr als 0,02 Gew.-%, bezogen auf die gesamte Kaugummi-Zusammensetzung, vorliegt, wenn das erste Süßungsmittel in einer Menge vorliegt, die ausreicht, um dem Kaugummi mindestens einen normalen Grad der Süße zu verleihen, und wobei die Menge des vorhandenen Alitame erhöht wird, wenn die Menge des ersten Süßungsmittels geringer ist als die Menge, die ausreicht, um dem Kaugummi mindestens einen normalen Grad der Süße zu verleihen, wobei die Menge des Alitame ausreicht, um dem Kaugummi eine erhöhte Süße und eine erhöhte Geschmacksintensität zu verleihen, verglichen mit dem Kaugummi, der solche Mengen an Süßungsmitteln enthält, die dem Kaugummi einen normalen Grad der Süße verleihen.

16. Verfahren nach Anspruch 15, worin das Alitame in einer Menge von 0,04 bis 0,2 Gew.-%, bezogen auf die gesamte Kaugummi-Zusammensetzung, vorliegt.

## Revendications

1. Composition de gomme à mâcher comprenant un mélange intime de :
a) 5 % à 95 % d'une base de gomme ;
b) 0,1 % à 10 % d'arôme;
c) 10 % à 90 % d'un premier agent édulcorant choisi parmi des sucres, des alcools de sucre et des mélanges de ceux-ci ; et
d) de l'alitame, l'alitame étant présent en une quantité valant plus de 0,02 % en poids de la composition totale de gomme quand ledit premier agent édulcorant est présent en une quantité suffisante pour conférer à la gomme au moins un degré normal de sucrosité, et la quantité d'alitame présent étant augmentée quand la quantité dudit premier agent édulcorant est plus petite qu'une quantité suffisante pour conférer à la gomme au moins un degré normal de sucrosité, la quantité d'alitame étant suffisante pour procurer à la gomme une sucrosité et une intensité d'arôme prolongées, comparée à une gomme contenant des quantités d'édulcorants qui confèrent un degré normal de sucrosité à la gomme.

2. Composition de gomme à mâcher telle que revendiquée dans la revendication 1, dans laquelle l'alitame est présent en une quantité valant plus de 0,04 % en poids de la composition totale de gomme.

3. Composition de gomme à mâcher telle que revendiquée dans la revendication 2, dans laquelle l'alitame est présent en une quantité valant entre 0,04 % et 0,2 % en poids de la composition totale de gomme.

4. Composition de gomme à mâcher telle que revendiquée dans l'une quelconque des revendications précédentes, dans laquelle ledit premier agent édulcorant est un sucre.

5. Composition de gomme à mâcher telle que revendiquée dans l'une quelconque des revendications 1 à 3, dans laquelle ledit premier agent édulcorant est un alcool de sucre.

6. Composition de gomme à mâcher telle que revendiquée dans l'une quelconque des revendications 1 à 4, comprenant, en outre, un édulcorant artificiel autre qu'un dipeptide, choisi parmi l'acésulfame, le sucralose, l'acide saccharique et ses sels, le cyclamate et ses sels, et des mélanges de ceux-ci.

7. Composition de gomme à mâcher telle que revendiquée dans la revendication 6, dans laquelle l'alitame est présent en une quantité valant plus de 0,02 % en poids de la composition totale de gomme à mâcher, l'agent édulcorant et l'édulcorant autre qu'un dipeptide, pris ensemble, étant présents en une quantité appropriée pour conférer un degré normal de sucrosité à la gomme.

8. Procédé de préparation d'une composition de gomme, comprenant les étapes consistant à :
a) fournir :
5 % à 95 % en poids d'une base de gomme,
0,1 % à 10 % en poids d'arôme,
10 % à 90 % en poids d'un premier agent édulcorant choisi parmi des sucres, des alcools de sucre et des mélanges de ceux-ci ; et
de l'alitame, l'alitame étant présent en une quantité valant plus de 0,02 % en poids de la composition totale de gomme quand ledit premier agent édulcorant est présent en une quantité suffisante pour conférer à la gomme au moins un degré normal de sucrosité, et la quantité d'alitame présent étant augmentée quand la quantité dudit premier agent édulcorant est plus petite qu'une quantité suffisante pour conférer à la gomme au moins un degré normal de sucrosité, la quantité d'alitame étant suffisante pour procurer à la gomme une sucrosité et une intensité d'arôme prolongées, comparée à une gomme contenant des quantités d'édulcorants qui confèrent un degré normal de sucrosité à la gomme ;
b) mélanger intimement la base de gomme, l'agent édulcorant et de charge, l'arôme et l'alitame pour produire une composition de gomme à mâcher.

9. Procédé tel que revendiqué dans la revendication 8, où l'alitame est présent en une quantité valant plus de 0,04 % en poids de la composition totale de gomme.

10. Procédé tel que revendiqué dans la revendication 9, où l'alitame est présent en une quantité valant de 0,04% à 0,2 % en poids de la composition totale de gomme.

11. Procédé tel que revendiqué dans l'une quelconque des revendications 8 à 10, où l'agent édulcorant et de charge choisi est un sucre.

12. Procédé tel que revendiqué dans l'une quelconque des revendications 8 à 10, où l'agent édulcorant et de charge choisi est un alcool de sucre.

13. Procédé tel que revendiqué dans l'une quelconque des revendications 8 à 12, comprenant, en outre, l'étape consistant à combiner un édulcorant artificiel autre qu'un dipeptide dans la composition de gomme, ledit édulcorant autre qu'un dipeptide étant choisi parmi les sels d'acésulfame, le sucralose, l'acide saccharique et ses sels, un cyclamate et ses sels, et des mélanges de ceux-ci.

14. Procédé tel que revendiqué dans la revendication 13, où l'édulcorant artificiel autre qu'un dipeptide et le premier agent édulcorant sont présents en une quantité appropriée pour conférer un degré normal de sucrosité à la gomme, et l'alitame est présent en une quantité valant plus de 0,02 % en poids de la composition totale de gomme.

15. Procédé pour allonger le temps pendant lequel la sucrosité et l'intensité du goût sont décelables pendant la mastication d'une composition de gomme à mâcher, comprenant l'étape qui consiste à mélanger intimement :
a) 5 % à 95 % d'une base de gomme ;
b) 0,1 % à 10 % d'arôme ;
c) 10 % à 90 % d'un premier agent édulcorant choisi parmi des sucres, des alcools de sucre et des mélanges de ceux-ci ; et
d) de l'alitame, l'alitame étant présent en une quantité valant plus de 0,02 % en poids de la composition totale de gomme quand ledit premier agent édulcorant est présent en une quantité suffisante pour conférer à la gomme au moins un degré normal de sucrosité, et la quantité d'alitame présent étant augmentée quand la quantité dudit premier agent édulcorant est plus petite qu'une quantité suffisante pour conférer à la gomme au moins un degré normal de sucrosité, la quantité d'alitame étant suffisante pour procurer à la gomme une sucrosité et une intensité d'arôme prolongées, comparée à une gomme contenant des quantités d'édulcorants qui confèrent un degré normal de sucrosité à la gomme.

16. Procédé tel que revendiqué dans la revendication 15, où l'alitame est présent en une quantité valant entre 0,04 % et 0,2 % en poids de la composition totale de gomme.
